# EUROPEAN PATENT APPLICATION

(11) **EP 4 559 729 A1**
(43) Date of publication of application: **28.05.2025**
(21) Application number: 24214063.0
(22) Date of filing: 20.11.2024
(51) Int. Cl.: B60L 53/14, B60L 53/16, B60L 53/20, B60L 53/00, B60L 53/30, B60L 53/31, B60L 53/62, B60L 53/66, B60L 58/10, H02J 7/00, B60L 53/10

(54) **CHARGING SYSTEM, CHARGING CONTROL METHOD, AND VEHICLE**

(30) Priority: 22.11.2023 CN 202311572679; 22.11.2023 CN 202323168936 U; 30.08.2024 WO PCT/CN2024/115857
(71) Applicant: Eve Energy Co., Ltd., Huizhou, Guangdong 516006 (CN)
(72) Inventor: HU, Wenbin, Huizhou, Guangdong, 516006 (CN)
(74) Representative: Berggren Oy

(57) **Abstract**

The present disclosure provides a charging system including an OBC (101), a wake-up auxiliary circuit (102), and a BMS (103). The OBC (101) is provided with a charging input port and a charging output port. The wake-up auxiliary circuit (102) includes a first diode (D1) having a positive electrode electrically connected to the charging output port, and a second diode (D2) having a positive electrode electrically connected to a direct current (DC) charging vehicle interface (1042), negative electrodes of the first and second diodes (D1, D2) are electrically connected to a same port of the BMS (103). The first diode (D1) is configured to transmit an alternating current (AC) charging wake-up signal emitted by an AC charging pile. The second diode (D2) is configured to transmit a DC charging wake-up signal emitted by a DC charging pile.

## Description

### TECHNICAL FIELD

The present disclosure relates to the field of batteries, and more particularly, to a charging system, a charging control method, and a vehicle.

### BACKGROUND

During charging of a powered device such as an electric vehicle, a battery management system (BMS) needs to be activated to awaken. Corresponding to two charging modes of direct current (DC) charging and alternating current (AC) charging, there are also two ways to activate and awaken, namely, DC charging wake-up and AC charging wake-up.

In the related art, the DC charging wake-up and the AC charging wake-up each use an interface of the BMS, which is typically an I/O port of the BMS. In addition, when AC charging is performed, a control pilot (CP) signal is detected by a vehicle controller.

The above-mentioned solution has a disadvantage in that due to the requirement of using two interfaces of the BMS for the DC charging wake-up and the AC charging wake-up, a demand for interfaces of the BMS increases. As a result, more chips are required to be employed to meet the demand for interfaces, which increases costs

### SUMMARY

In view of the above, the present disclosure provides a charging system, a charging control method, and a vehicle, which can transmit two charging wake-up signals by using a same port of a battery management system (BMS), thereby reducing a number of interfaces of the BMS occupied by the charging wake-up and reducing costs.

The present invention is defined by the independent claims as appended. Developments are set forth in the dependent claims.

According to a first aspect, an embodiment of the present disclosure provides a charging system, which is applicable to a vehicle, the charging system including an on-board charger, a wake-up auxiliary circuit, and a battery management system (BMS); where the on-board charger is provided with a charging input port and a charging output port; the wake-up auxiliary circuit includes a first diode and a second diode, the first diode having a positive electrode electrically connected to the charging output port, the second diode having a positive electrode electrically connected to a direct current (DC) charging vehicle interface, and a negative electrode of the first diode and a negative electrode of the second diode being electrically connected to a same port of the BMS; the first diode is configured to transmit an alternating current (AC) charging wake-up signal emitted by an AC charging pile, and the AC charging wake-up signal is configured to awaken the BMS upon AC charging; the second diode is configured to transmit a DC charging wake-up signal emitted by a DC charging pile, and the DC charging wake-up signal is configured to awaken the BMS upon DC charging.

According to a second aspect, an embodiment of the present disclosure provides a charging control method, which is applicable to the charging system described above, and the charging control method includes: acquiring a wake-up signal and a message signal; the wake-up signal being a direct current (DC) charging wake-up signal or an alternating current (AC) charging wake-up signal, and the message signal being a DC fast charging mode message signal or an AC slow charging mode message signal; awakening a battery management system (BMS) based on the wake-up signal; activating a target charging mode corresponding to the message signal based on the message signal; and charging a vehicle in the target charging mode.

According to a third aspect, an embodiment of the present disclosure provides a vehicle including the charging system described above.

By connecting the negative electrode of the first diode and the negative electrode of the second diode to the same port of the BMS, according to various aspects of the present disclosure, it is possible to use the same port of the BMS to transmit two charging wake-up signals, thereby reducing the number of interfaces of the BMS occupied by the charging wake-up and reducing costs.

### BRIEF DESCRIPTION OF THE DRAWINGS

The technical solution and other beneficial effects of the present disclosure will be apparent from the following detailed description of specific embodiments thereof, taken in conjunction with the accompanying drawings.
FIG. 1 shows a block diagram of a charging system according to an embodiment of the present disclosure;
FIG. 2 shows a schematic diagram of a structure of a charging system according to an embodiment of the present disclosure;
FIG. 3 shows a schematic diagram of a wake-up auxiliary circuit according to an embodiment of the present disclosure;
FIG. 4 shows a schematic diagram of an application of a charging system according to an embodiment of the present disclosure;
FIG. 5 shows a flowchart of a charging control method according to an embodiment of the present disclosure;
FIG. 6 shows a schematic diagram of a charging control method according to an embodiment of the present disclosure;
FIG. 7 shows a schematic diagram of an AC slow charging mode according to an embodiment of the present disclosure.

### DETAILED DESCRIPTION

In the description of the present disclosure, it should be understood that terms such as "center," "longitudinal," "lateral," "length," "width," "thickness," "up," "down," "front," "back," "left," "right," "vertical," "horizontal," "top," "bottom," "inside," "outside," "clockwise," and "counterclockwise" and other directional or positional relationships indicated are based on the directions or positional relationships shown in the accompanied drawings, only for the convenience of describing the present disclosure and simplifying the description, and do not indicate or imply that the devices or elements referred to must have a specific orientation, constructed and operated in a specific orientation, so they should not be understood as limiting the present disclosure. In addition, the terms "first" and "second" are used only for descriptive purposes and should not be understood as indicating or implying relative importance or implicitly indicating the quantity of the technical features indicated. Therefore, features specified as "first" and "second" can explicitly or implicitly include one or more of the said features. In the description of the present disclosure, the meaning of "multiple" is two or more, unless otherwise specified.

In the description of the present disclosure, it should be noted that unless otherwise specifically defined and limited, terms such as "mounting," "connecting," and "attaching" should be broadly understood, for example, they can be fixed connections or detachable connections, or integral connections; they can be mechanical connections or electrical connections or capable of mutual communication; they can be direct connections or indirect connections through intermediate media, and can be internal connections or interactive relationships between two components. For a person of ordinary skill in the art, the specific meanings of the above terms in the present disclosure can be understood according to the specific circumstances.

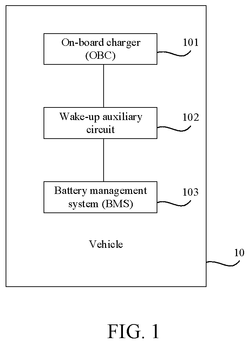

FIG. 1 shows a block diagram of a charging system according to an embodiment of the present disclosure. As shown in FIG. 1, the charging system is applicable to a vehicle 10, and the charging system includes an on-board charger (OBC) 101, a wake-up auxiliary circuit 102, and a battery management system (BMS) 103.

Herein, the OBC 101 is provided with a charging input port and a charging output port; the wake-up auxiliary circuit 102 includes a first diode and a second diode, the first diode having a positive electrode electrically connected to the charging output port, the second diode having a positive electrode electrically connected to a direct current (DC) charging vehicle interface, and a negative electrode of the first diode and a negative electrode of the second diode being electrically connected to a same port of the BMS 103. The first diode is configured to transmit an alternating current (AC) charging wake-up signal emitted by an AC charging pile, and the AC charging wake-up signal is configured to awaken the BMS 103 upon AC charging; the second diode is configured to transmit a DC charging wake-up signal emitted by a DC charging pile, and the DC charging wake-up signal is configured to awaken the BMS 103 upon DC charging.

By connecting the negative electrode of the first diode and the negative electrode of the second diode to the same port of the BMS 103, embodiments of the present disclosure can transmit two charging wake-up signals by using the same port of the BMS, thereby reducing the number of interfaces of the BMS occupied by charging wake-up, and reducing costs.

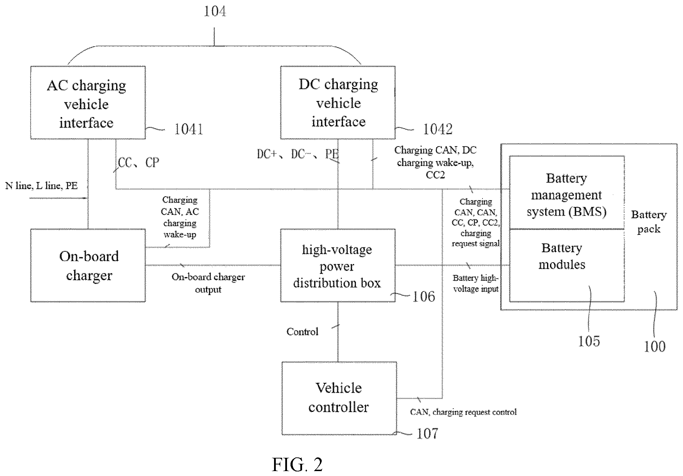

FIG. 2 shows a schematic diagram of a structure of a charging system according to an embodiment of the present disclosure. Referring to FIG. 2, the vehicle also includes a vehicle interface 104 and battery modules 105. Both the BMS 103 and the battery modules 105 are part of the battery pack 100, and the BMS 103 is electrically connected to the battery modules 105 for management and control of the battery modules 105.

It should be noted that charging modes of an electric vehicle are divided into a fast charging mode and a slow charging mode. The fast charging mode is a mode in which the electric vehicle is charged by a fast charging pile (i.e., a DC charging pile), and the slow charging mode is a mode in which the electric vehicle is charged by a slow charging pile (i.e., an AC charging pile). An off-board charger 101 may be provided in the DC charging pile to convert an AC power source into a DC power source, thereby rapidly charging the electric vehicle; the off-board charger 101 may not be provided in the AC charging pile. Corresponding to the AC charging pile, the OBC 101 is provided in the vehicle. The AC charging pile is configured to provide a standard AC charging interface, and the OBC 101 is configured to convert a received AC current into the DC power source to charge the battery modules 105.

In the present disclosure, although not shown in FIG. 2, the charging system may include a charging pile that is a DC charging pile or an AC charging pile. Accordingly, the vehicle interface 104 includes a DC charging vehicle interface 1042 electrically connected to the DC charging pile and an AC charging vehicle interface 1041 electrically connected to the AC charging pile. Optionally, the DC charging vehicle interface 1042 is electrically connected to the DC charging pile by a charging gun that complies with a DC charging standard, and the AC charging vehicle interface 1041 is electrically connected to the AC charging pile by a charging gun that complies with an AC charging standard. The positive electrode of the second diode is electrically connected to the DC charging vehicle interface 1042 to transmit the DC charging wake-up signal.

In one embodiment, as shown in FIG. 2, the charging system further includes a high-voltage power distribution box 106 electrically connected to the DC charging vehicle interface 1042 and the OBC 101. Under a condition that charging is performed in a DC mode, a DC signal may be transmitted to the high-voltage power distribution box 106 through the DC charging vehicle interface 1042. Under a condition that charging is performed in an AC mode, an AC signal needs to be converted into a DC signal through the OBC, and then the converted DC signal is transmitted to the high-voltage power distribution box 106. After processing the DC signal, the high-voltage power distribution box 106 may charge the battery modules 105 with the processed DC signal.

In one embodiment, the OBC 101 is provided with a charging input port electrically connected to the AC charging vehicle interface 1041 and a charging output port electrically connected to the high-voltage power distribution box 106.

Referring to FIG. 2, the charging system further includes a vehicle controller 107 electrically connected to the high-voltage power distribution box 106 to control the high-voltage power distribution box 106 to process the DC signal.

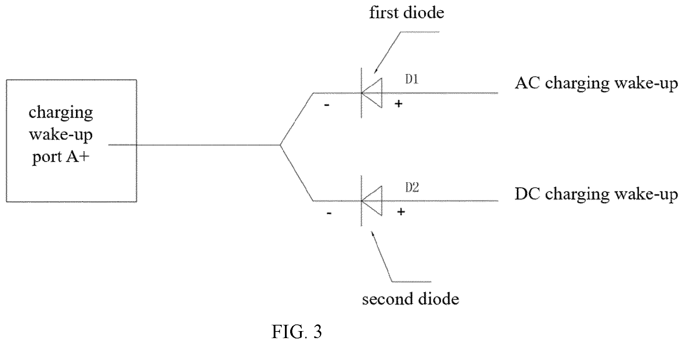

FIG. 3 shows a schematic diagram of a wake-up auxiliary circuit 102 according to an embodiment of the present disclosure. As shown in FIG. 3, the wake-up auxiliary circuit 102 includes a first diode D1 having a positive electrode electrically connected to the charging output port for transmitting an AC charging wake-up signal for waking the BMS 103 upon AC charging, and a second diode D2 having a positive electrode electrically connected to the DC charging vehicle interface 1042 for transmitting a DC charging wake-up signal for waking the BMS 103 upon DC charging.

In one embodiment, the BMS 103 is provided with a charging wake-up port, and the negative electrode of the first diode D1 and the negative electrode of the second diode D2 are electrically connected to a same charging wake-up port A+ of the BMS 103.

Since the negative electrode of the first diode and the negative electrode of the second diode are connected to the same charging wake-up port of the BMS 103, the embodiment of the present disclosure can transmit two charging wake-up signals by using the same port of the BMS, thereby reducing the number of interfaces of the BMS 103 occupied by the charging wake-up and reducing costs. In addition, due to one-way conductivity of diodes, AC charging is not affected when the DC charging wake-up signal is operated, and DC charging is not affected when the AC charging wake-up signal is operated. That is, the DC charging wake-up signal and the AC charging wake-up signal are mutually independent in that the DC charging wake-up signal and the AC charging wake-up signal do not affect each other, thereby improving the safety of the charging wake-up process.

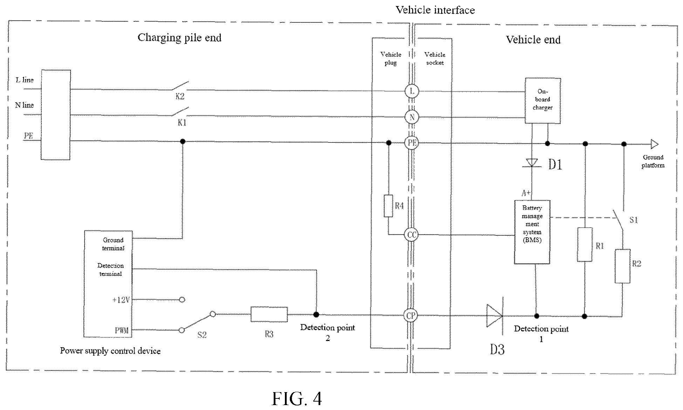

FIG. 4 shows a schematic diagram of an application of a charging system according to an embodiment of the present disclosure. As shown in FIG. 4, the charging system may be divided into a charging pile end and a vehicle end. A vehicle plug is provided on the charging pile, a vehicle socket is provided on the vehicle, and the vehicle plug and the vehicle socket may be electrically connected through a charging gun. In some embodiments, the vehicle socket and the vehicle interface 104 may be a same component. Note that FIG. 4 mainly shows an AC charging mode, and the charging pile in FIG. 4 may be an AC charging pile.

In one embodiment, the vehicle interface 104 includes a control pilot pin for transmitting a control pilot (CP) signal emitted by the DC charge pile or the AC charge pile. The control pilot pin may be configured for monitoring and controlling of charging states. The vehicle further includes a third diode D3, a positive electrode of which is electrically connected to the control pilot pin, and a negative electrode of which is electrically connected to the BMS 103. The negative electrode of the third diode D3 is a first detection point, that is, detection point 1.

In one embodiment, the vehicle interface 104 further includes a ground pin PE, the ground pin being grounded, and the vehicle further includes a first resistor R1, a second resistor R2, and a first switch S 1. Herein, a first terminal of the first resistor R1 is electrically connected to the negative electrode of the third diode, and a second terminal of the first resistor R1 is electrically connected to the ground pin; a first terminal of the second resistor R2 is electrically connected to the negative terminal of the third diode, and a second terminal of the second resistor R2 is electrically connected to a first terminal of the first switch S1; a second terminal of the first switch S1 is electrically connected to the ground pin, and a third terminal of the first switch S1 is electrically connected to the BMS 103. The first switch S1 is configured to control whether the second resistor R2 is connected to ground, and the BMS 103 controls switching states of the first switch S1. Optionally, the first switch S1 may be a low-voltage relay. A resistance value of the second resistor R2 is equal to a resistance value of the first resistor R1.

In one embodiment, the charging pile includes a power supply control device, a second switch S2, and a third resistor R3. Herein, the power supply control device is provided with a power supply output terminal, a power supply ground terminal, a detection terminal, and a control signal output terminal. The power supply output terminal is electrically connected to the BMS 103, and the power supply ground terminal is grounded; a first terminal of the second switch S2 is electrically connected to the control signal output terminal (PWM) or the power supply output terminal (+12V), and a second terminal of the second switch S2 is electrically connected to a first terminal of the third resistor R3; a second terminal of the third resistor R3 is electrically connected to the control pilot pin and the detection terminal. The second terminal of the third resistor R3 is a second detection point, that is, detection point 2. Optionally, a resistance value of the third resistor R3 is half of a resistance value of the first resistor R1.

In one embodiment, the vehicle interface 104 further includes a charging connection confirmation pin for transmitting a charging connection confirmation (CC) signal that may be configured to confirm whether the vehicle plug and the vehicle socket are fully connected in a slow charging mode. The charging pile further includes a fourth resistor R4, a first terminal of which is electrically connected to the charging connection confirmation pin and connected to the BMS 103 through the charging connection confirmation pin, and a second terminal of which is grounded. Herein, the vehicle plug may act as an external charging interface for the charging pile, and the fourth resistor R4 may be provided within the vehicle plug.

In one embodiment, the vehicle interface 104 also includes three-phase AC pins, such as L and N in FIG. 4. A third switch K1 and a fourth switch K2 may be provided on the L line and the N line that are connected between the three-phase AC pin and the charging pile end, respectively, for controlling whether to output a three-phase AC of the charging pile end to the vehicle interface 104. DC+ denotes a positive DC charging voltage during DC charging of the vehicle, and DC- denotes a negative DC charging voltage during DC charging of the vehicle.

The present disclosure also provides a vehicle including the charging system. It will be appreciated that other systems or components may be provided in the vehicle in addition to the charging system, and the present disclosure does not limit the other systems or components of the vehicle.

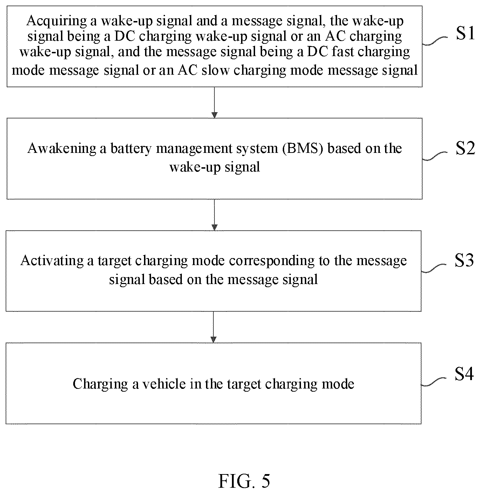

FIG. 5 shows a flowchart of a charging control method according to an embodiment of the present disclosure. The charging control method is applicable to the charging system. Herein, the charging control method may be executed by the BMS 103 in which a processor is provided for executing the charging control method. As shown in FIG. 5, the charging control method includes the following Steps S1 to S4.

Step S1: Acquiring a wake-up signal and a message signal. The wake-up signal is a DC charging wake-up signal or an AC charging wake-up signal, and the message signal is a DC fast charging mode message signal or an AC slow charging mode message signal.

In one embodiment, under a condition that the DC charging vehicle interface 1042 of the vehicle is connected to the charging plug of the DC charging pile, the DC charging wake-up signal may be emitted by the DC charging device in the DC charging pile and transmitted to the charging wake-up port A+ of the BMS 103 through the DC charging vehicle interface 1042 to activate the BMS 103. A communication bus, such as a CAN bus, may be arranged in the vehicle, and the communication bus may identify a particular charging mode. The communication bus automatically generates a DC fast charging mode message signal upon connection of the DC charging vehicle interface 1042 of the vehicle to the charging plug of the DC charging pile, and transmits the DC fast charging mode message signal to the BMS 103.

In one embodiment, under a condition that the AC charging vehicle interface 1041 of the vehicle is connected to the charging plug of the AC charging pile, the AC charging wake-up signal may be transmitted by the OBC 101 to the charging wake-up port A+ of the BMS 103 to activate the BMS 103. A communication bus, such as a CAN bus, may be arranged in the vehicle, and the communication bus may identify a particular charging mode. The communication bus automatically generates an AC slow charging mode message signal upon connection of the AC charging vehicle interface 1041 of the vehicle to the charging plug of the AC charging pile, and transmits the AC slow charging mode message signal to the BMS 103.

Step S2: Awakening a battery management system (BMS) based on the wake-up signal.

In one embodiment, the wake-up signal may be a DC charging wake-up signal or an AC charging wake-up signal. The DC charging wake-up signal may wake up the BMS 103 in a DC charging scenario so that the BMS operates properly in the DC charging scenario. The AC charging wake-up signal may wake up the BMS 103 in an AC charging scenario so that the BMS operates properly in the AC charging scenario.

Step S3: Activating a target charging mode corresponding to the message signal based on the message signal.

In one embodiment, after the BMS 103 is awakened by the wake-up signal, a target charging mode corresponding to the message signal is activated based on the message signal, and target charging information corresponding to the target charging mode is generated.

In one embodiment, the target charging mode may be a DC fast charging mode or an AC slow charging mode. The BMS 103 may be awakened by a DC charging wake-up signal, or may be awakened by an AC charging wake-up signal. Upon awakening of the BMS 103 by the DC charging wake-up signal, the DC fast charging mode may be enabled based on the received DC fast charging mode message signal, and target charging information corresponding to the target charging mode may be generated in the DC fast charging mode. At this point, the target charging information may be DC charging current and DC charging voltage information.

In one embodiment, upon awakening of the BMS 103 by the AC charging wake-up signal, the AC fast charging mode may be enabled based on the received AC fast charging mode message signal, and target charging information corresponding to the target charging mode may be generated in the AC fast charging mode. At this point, the target charging information may be AC charging current and AC charging voltage information.

Step S4: Charging a vehicle in the target charging mode.

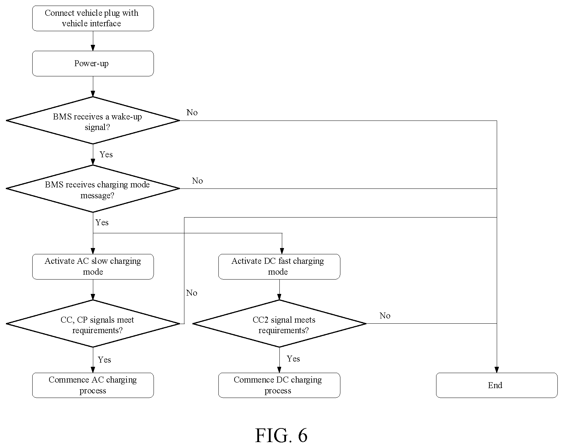

FIG. 6 shows a schematic diagram of a charging control method according to an embodiment of the present disclosure. As shown in FIG. 6, after the vehicle plug is connected with the vehicle interface 104, the power supply control device on the charging pile side, which may be a low-voltage auxiliary power supply, is first powered up. Upon normal operation of the power supply control device, the power supply control device provides a 12V power source to the BMS 103, the vehicle controller 107, and the OBC 101 on the vehicle side. Under a condition that the power-up process fails, the charging process may be directly terminated.

Under a condition that the power-up process successes, the DC wake-up signal or the AC wake-up signal is used to activate the BMS 103. Upon receiving the wake-up signal by the BMS 103, the BMS 103 may further receive a charging mode message corresponding to the wake-up signal from the communication bus, and generate the target charging information upon receiving the charging mode message, so as to activate the corresponding charging mode. Under a condition that the BMS 103 does not receive the wake-up signal or the charging mode message, the charging process may be directly terminated.

Under a condition that the BMS 103 activates the AC slow charging mode, the BMS 103 needs to further determine whether the CC signal and the CP signal meet requirements, and commence an AC charging process if the requirements are met. Under a condition that the BMS 103 activates the DC fast charging mode, the BMS 103 needs to further determine whether a CC2 signal meets requirements, and commence a DC charging process if the requirements are met. Under a condition that the aforementioned requirements are not met, the charging process may be directly terminated, regardless of the fast charging mode or the slow charging mode.

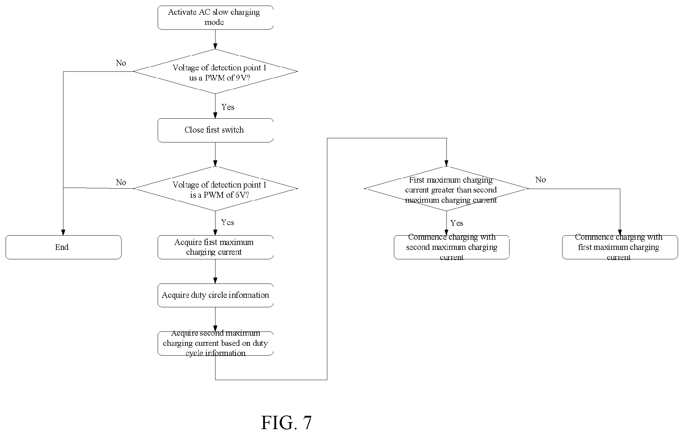

FIG. 7 shows a schematic diagram of an AC slow charging mode according to an embodiment of the present disclosure. The specific operation process of the charging control method will be described below in connection with the AC slow charging mode.

In one embodiment, the target charging mode includes an AC slow charging mode and a DC fast charging mode. The charging of the vehicle in the target charging mode includes the following Steps S31 to S33.

Step S31: Acquiring a voltage signal of a first detection point under a condition that the target charging mode is the AC slow charging mode;

In one embodiment, under a condition that the target charging mode is an AC slow charging mode, the BMS 103 may detect a voltage signal of the first detection point at the beginning of the AC slow charging mode.

Step S32: Determining whether the voltage signal of the first detection point is a pulse width modulation signal of a predetermined first magnitude;

In one embodiment, optionally, the first magnitude may be 9V The first terminal of the second switch may be connected to the control signal output terminal (PWM) or to the power supply output terminal (+12V). The second switch is connected to the power supply output terminal before the vehicle plug is inserted into the vehicle interface 104. The power supply control device identifies charging connection states by detecting a voltage signal of the detection point 2. Under a condition that the BMS 103 detects that the voltage of the first detection point is 9V and the power supply control device detects that the voltage of the detection point 2 is 9V after the vehicle plug is connected to the vehicle interface 104, it is determined that the charging connection is completed. At this point, the power supply control device switches the first terminal of the second switch to the control signal output terminal. The power supply control device emits a PWM signal.

Step S33: Charging the vehicle under a condition that the voltage signal of the first detection point is the pulse width modulation signal of the predetermined first magnitude.

Further, the charging of the vehicle under a condition that the voltage signal of the first detection point is the pulse width modulation signal of the predetermined first magnitude includes the following Steps S331 and S332.

Step S331: Closing the first switch under a condition that the voltage signal of the first detection point is the pulse width modulation signal of the predetermined first magnitude.

When the BMS 103 detects a PWM signal having a voltage of 9V at the first detection point, and the power supply control device detects a PWM signal having a voltage of 9V at the second detection point, it indicates that the charging state is a charging facility ready state. At this point, the BMS 103 controls the closure of the first switch, resulting in PWM signals of 6V at both the first and second detection points. Consequently, the AC charging pile commences the AC slow charging state to charge the vehicle.

Step S332: Detecting whether the voltage signal of the first detection point is a pulse width modulation signal of a predetermined second magnitude, and charging the vehicle under a condition that the voltage signal of the first detection point is the pulse width modulation signal of the predetermined second magnitude.

Optionally, the second magnitude is 6V

Further, the charging of the vehicle under a condition that the voltage signal of the first detection point is the pulse width modulation signal of the predetermined second magnitude includes the following Steps A1 to A5.

Step A1: Acquiring a cable rated capacity of the charging pile corresponding to a resistance value of a fourth resistor;

Step A2: Determining a first maximum charging current of the charging pile based on the cable rated capacity;

In one embodiment, the BMS 103 detects the resistance value of the fourth resistor and acquires the cable rated capacity of the charging pile based on the resistance value of the fourth resistor, thereby acquiring the first maximum charging current supported by the charging pile. Herein, the resistance value of the fourth resistor has a one-to-one correspondence with the cable rated capacity. Different resistance values of the fourth resistor correspond to different cable rated capacities.

Step A3: Acquiring duty cycle information of the pulse width modulation signal of the predetermined second magnitude;

Step A4: Determining a second maximum charging current of the charging pile based on the duty cycle information;

In one embodiment, the BMS 103 detects duty cycle information of the PWM signal and identifies the second maximum charging current of the charging pile based on the duty cycle information while making comparison to obtain a smaller charging current.

Step A5: Determining a target charging current based on the first maximum charging current and the second maximum charging current, and charging the vehicle with the target charging current.

Further, the determining of the target charging current based on the first maximum charging current and the second maximum charging current, and the charging of the vehicle with the target charging current include the following Steps A51 and A52.

Step A51: Comparing the first maximum charging current with the second maximum charging current.

Step A52: Charging the vehicle with the second maximum charging current as the target charging current under a condition that the first maximum charging current is greater than the second maximum charging current; charging the vehicle with the first maximum charging current as the target charging current under a condition that the first maximum charging current is less than or equal to the second maximum charging current.

In one embodiment, the vehicle interface 104 may also include a CC2 pin for charging connection confirmation in the DC fast charging mode. The operation process in the DC fast charging mode is similar to that in the AC slow charging mode, and details are not repeatedly described.

In summary, compared with the related art in which the CP signal is detected by the vehicle controller 107, the vehicle controller 107 transmits relevant information to the BMS 103 after detection, and the BMS 103 then sends request charging information for voltage and current based on duty cycle information, and the vehicle controller 107 then performs a charging process based on the request information, leading to a complicated charging process with many charging stages and a higher probability of errors, in the embodiments of the present disclosure, by receiving a wake-up signal and a message signal, after the BMS 103 is awakened by the wake-up signal, a target charging mode corresponding to the message signal is activated based on the message signal, and the CP signal and the duty cycle are detected by the BMS 103, so that a process of converting the received data is eliminated. The BMS 103 can directly send the request charging information for current based on the CP signal and the duty cycle information detected by the BMS 103, thereby solving the complex problem resulted from a charging signal identification process, simplifying the charging signal identification process, reducing operational stages, improving charging identification efficiency, and reducing the error rate, making it more reliable and safe.

In the above-mentioned embodiments, the description of each embodiment has its own emphasis, and parts not described in detail in a certain embodiment may be referred to the related description of other embodiments.

The charging system, the charging control method, and the vehicle according to the embodiments of the present disclosure are described in detail, and the principles and implementations of the present disclosure are described herein using specific examples. The description of the above embodiments is merely intended to help understand the technical solutions and the core idea of the present disclosure. It will be appreciated by a person of ordinary skills in the art that modifications may still be made to the technical solutions described in the foregoing embodiments, or equivalents may be made to some of the technical features therein, and that these modifications or substitutions do not depart the essence of the corresponding technical solutions from the scope of the technical solutions of the embodiments of the present disclosure.

## Claims

1. A charging system, which is applicable to a vehicle (10), the charging system comprising:
an on-board charger (OBC) (101), a wake-up auxiliary circuit (102), and a battery management system (BMS) (103);
wherein the OBC (101) is provided with a charging input port and a charging output port;
the wake-up auxiliary circuit (102) includes a first diode (D1) having a positive electrode electrically connected to the charging output port, and a second diode (D2) having a positive electrode electrically connected to a direct current (DC) charging vehicle interface (1042), and a negative electrode of the first diode (D1) and a negative electrode of the second diode (D2) are electrically connected to a same port of the BMS (103);
the first diode (D1) is configured to transmit an alternating current (AC) charging wake-up signal emitted by an AC charging pile, the AC charging wake-up signal is configured to awaken the BMS (103) upon AC charging;
the second diode (D2) is configured to transmit a DC charging wake-up signal emitted by a DC charging pile, and the DC charging wake-up signal is configured to awaken the battery management system upon DC charging.

2. The charging system of claim 1, wherein the vehicle (10) further comprises a vehicle interface (104), the vehicle interface (104) including a control pilot pin for transmitting a control pilot (CP) signal emitted by the DC charging pile or the AC charging pile, the vehicle (10) further including:
a third diode (D3) having a positive electrode electrically connected to the control pilot pin and a negative electrode electrically connected to the BMS (103).

3. The charging system of claim 2, wherein the vehicle interface (104) further comprises a ground pin (PE), the ground pin (PE) being grounded, the vehicle (10) further including:
a first resistor (R1), a first terminal of the first resistor (R1) being electrically connected to the negative terminal of the third diode (D3), and a second terminal of the first resistor (R1) being electrically connected to the ground pin (PE);
a second resistor (R2), a first terminal of the second resistor (R2) being electrically connected to the negative electrode of the third diode (D3) and a second terminal of the second resistor (R2) being electrically connected to a first terminal of a first switch (S1);
the first switch (S1), a second terminal of the first switch (S1) being electrically connected to the ground pin (PE) and a third terminal of the first switch (S1) being electrically connected to the BMS (103).

4. The charging system of claim 3, further comprising a charging pile, the charging pile including:
a power supply control device provided with a power supply output terminal, a power supply ground terminal, a detection terminal, and a control signal output terminal, the power supply output terminal being electrically connected to the BMS (103), and the power supply ground terminal being grounded;
a second switch (S2), a first terminal of the second switch (S2) being electrically connected to the control signal output terminal or the power supply output terminal, and a second terminal of the second switch (S2) being electrically connected to a first terminal of a third resistor (R3);
the third resistor (R3), a second terminal of the third resistor (R3) being electrically connected to the control pilot pin and the detection terminal.

5. The charging system of any one of claims 1 to 4, wherein the vehicle interface (104) further includes a charging connection confirmation pin for transmitting a charging connection confirmation (CC) signal, the charging pile further includes a fourth resistor (R4), a first terminal of the fourth resistor (R4) being electrically connected to the charging connection confirmation pin, and a second terminal of the fourth resistor (R4) being grounded.

6. The charging system of any one of claims 1 to 4, further comprising a charging pile including a DC charging pile and an AC charging pile, the vehicle interface (104) including the DC charging vehicle interface (1042) and an AC charging vehicle interface (1041), the DC charging vehicle interface (1042) being electrically connected to the DC charging pile, the AC charging vehicle interface (1041) being electrically connected to the AC charging pile, and the charging input port being electrically connected to the AC charging vehicle interface (1041).

7. The charging system of claim 6, wherein the DC charging vehicle interface (1042) is electrically connected to the DC charging pile by a charging gun that complies with a DC charging standard, and the AC charging vehicle interface (1041) is electrically connected to the AC charging pile by a charging gun that complies with an AC charging standard

8. The charging system of claim 1, wherein the vehicle (10) further comprises battery modules (105), the BMS (103) is electrically connected to the battery modules (105).

9. The charging system of claim 1, further comprising a high-voltage power distribution box (106) electrically connected to the DC charging vehicle interface (1042) and the OBC (101).

10. A charging control method, which is applicable to the charging system of any one of claims 1 to 9, the charging control method comprising:
acquiring (S1) a wake-up signal and a message signal, the wake-up signal being a direct current (DC) charging wake-up signal or an alternating current (AC) charging wake-up signal, and the message signal being a DC fast charging mode message signal or an AC slow charging mode message signal;
awakening (S2) a battery management system (BMS) (103) based on the wake-up signal;
activating (S3) a target charging mode corresponding to the message signal based on the message signal;
charging (S4) a vehicle (10) in the target charging mode.

11. The charging control method of claim 10, wherein the target charging mode includes an AC slow charging mode, the charging (S4) of the vehicle (10) in the target charging mode including:
acquiring (S31) a voltage signal of a first detection point under a condition that the target charging mode is the AC slow charging mode;
determining (S32) whether the voltage signal of the first detection point is a pulse width modulation signal of a predetermined first magnitude;
charging (S33) the vehicle (10) under a condition that the voltage signal of the first detection point is the pulse width modulation signal of the predetermined first magnitude.

12. The charging control method of claim 11, wherein the charging (S33) of the vehicle (10) under a condition that the voltage signal of the first detection point is the pulse width modulation signal of the predetermined first magnitude including:
closing (S331) the first switch (S1) under a condition that the voltage signal of the first detection point is the pulse width modulation signal of the predetermined first magnitude;
detecting (S332) whether the voltage signal of the first detection point is a pulse width modulation signal of a predetermined second magnitude, and charging the vehicle (10) under a condition that the voltage signal of the first detection point is the pulse width modulation signal of the predetermined second magnitude.

13. The charging control method of claim 11, wherein the charging of the vehicle (10) under a condition that the voltage signal of the first detection point is the pulse width modulation signal of the predetermined second magnitude including:
acquiring (A1) a cable rated capacity of the charging pile corresponding to a resistance value of the fourth resistor (R4);
determining (A2) a first maximum charging current of the charging pile based on the cable rated capacity;
acquiring (A3) duty cycle information of the pulse width modulation signal of the predetermined second magnitude;
determining (A4) a second maximum charging current of the charging pile based on the duty cycle information;
determining (A5) a target charging current based on the first maximum charging current and the second maximum charging current, and charging the vehicle (10) with the target charging current.

14. The charging control method of claim 13, wherein the determining (A5) of the target charging current based on the first maximum charging current and the second maximum charging current, and the charging of the vehicle (10) with the target charging current including:
comparing (A51) the first maximum charging current with the second maximum charging current;
charging (A52) the vehicle (10) with the second maximum charging current as the target charging current under a condition that the first maximum charging current is greater than the second maximum charging current; charging the vehicle (10) with the first maximum charging current as the target charging current under a condition that the first maximum charging current is less than or equal to the second maximum charging current.

15. A vehicle (10) comprising the charging system of any one of claims 1 to 9, or performing the charging control method of any one of claims 10 to 14.
